# EUROPEAN PATENT APPLICATION

(11) **EP 1 975 038 A2**
(43) Date of publication of application: **01.10.2008**
(21) Application number: 08152991.9
(22) Date of filing: 19.03.2008
(51) Int. Cl.: B62D 1/19

(54) **Shear capsule for steering column assembly**

(30) Priority: 29.03.2007 US 729677
(71) Applicant: Delphi Technologies, Inc., Troy, Michigan 48007 (US)
(72) Inventor: Bodtker, Joen Christen, Flint, MI 48532 (US)
(74) Representative: Denton, Michael John

(57) **Abstract**

A shear capsule (22) for an energy absorbing steering column assembly (20) of a vehicle has a pin (30) projecting along a centerline (42) and from a preferably stationary bracket (26) generally of the vehicle chassis. The pin (30) extends along a centerline (42) through a deformation member (34) being or connected to a support of the steering column assembly (20) and to a distal end that connects to a fastener (36). The fastener (36) is preferably a threaded nut that exerts an axial compressive force upon the bracket (26) through a portion of the spring clip (32) and another axially directed force to resiliently flexible fingers of the spring clip (32) through the deformation member (34). Upon a forward directed force placed upon the assembly with respect to the vehicle and during a vehicle collision, the deformation member (34) plastically deforms thereby releasing the steering column assembly (20) from the bracket (26) and preferably with the pin (30), spring clip (32) and fastener (36) remaining as one rigid and non-compliant element attached to the bracket (26).

## Description

### TECHNICAL FIELD

The present invention relates to a steering column assembly for a vehicle, and more particularly to a shear capsule of the energy absorbing steering column assembly.

### BACKGROUND OF THE INVENTION

Steering column assemblies for today's typical vehicles have energy absorption capability for protecting the driver of a vehicle during collisions. Two devices are commonly used in conjunction with one another. The first device enables the steering column to collapse telescopically should the driver impact the steering wheel with an impact force that exceeds a predetermined threshold. The second device, commonly referred to as a shear capsule, enables release of the steering column assembly from a stationary bracket of the vehicle chassis and should a predetermined threshold force be exceeded. Often, the shear capsule must first release the assembly from the bracket before the assembly can telescopically collapse via any known variety of the first device.

Known shear capsules often utilize a partially plastic pin or connector that engages the metal bracket to a metal support of the steering column assembly. During a collision, the weaker plastic of the connector, as oppose to the metal bracket and metal support, will shear and the break separating the bracket from the support. Typically, the plastic of the connector must be injected into surrounding structure of the capsule that enables assembly of the support to the bracket during manufacturing and provides sufficient strength during normal use of the vehicle. The plastic injection process used to assemble the shear capsule to the column assembly often requires expensive equipment. Furthermore, shear capsules of this variety have complicated shapes that are costly to produce.

### SUMMARY OF THE INVENTION

A shear capsule for an energy absorbing steering column assembly of a vehicle has a pin projecting along a centerline and from a preferably stationary bracket generally of the vehicle chassis. The pin extends along a centerline through a deformation member being or connected to a support of the steering column assembly and to a distal end that connects to a fastener. The fastener is preferably a threaded nut that exerts an axial compressive force upon the bracket through a portion of the spring clip and another axially directed force to resiliently flexible fingers of the spring clip through the deformation member. Upon a forward directed force placed upon the assembly with respect to the vehicle and during a vehicle collision, the deformation member plastically deforms thereby releasing the steering column assembly from the stationary bracket and preferably with the pin, spring clip and fastener remaining as one rigid and non-compliant element attached to the bracket.

Objects, features and advantages of the present invention include a shear capsule for an energy absorbing steering column assembly having a spring clip that is easily prestaged to a deformation member for later assembly of the column assembly to the bracket of the vehicle chassis. Other advantages include a capsule capable of producing two independent axial loads with one load being easily adjustable depending upon application needs without affecting the other load. Yet other advantages include a shear capsule having few parts, relatively simple in design, robust and economical to manufacture.

### BRIEF DESCRIPTION OF THE DRAWINGS

These and other objects, features and advantages of this invention will be apparent from the following detailed description, appended claims, and accompanying drawings in which:

Figure 1 is an exploded perspective view of a shear capsule for an energy absorbing steering column embodying the present invention;

Figure 2 is an exploded top view of a deformation member and a spring clip of the shear capsule illustrating the spring clip in an as-formed state;

Figure 3 is a top view of the deformation member and the spring clip in a prestaged state;

Figure 4 is a cross section of the shear capsule in the prestaged state prior to assembly in the vehicle;

Figure 5 is a cross section of the shear capsule when assembled;

Figure 6 is an enlarged partial cross section of the shear capsule taken from circle 6 of Figure 4;

Figure 7 is an enlarged partial cross section of the shear capsule taken from circle 7 of Figure 5;

Figure 8 is a perspective view of a second embodiment of a spring clip of a shear capsule;

Figure 9 is an exploded top view of the second embodiment illustrating a deformation member and the spring clip illustrated in an as-formed state;

Figure 10 is a top view of the deformation member and the spring clip in a prestaged state;

Figure 11 is a side view of the deformation member and the spring clip in the prestaged state;

Figure 12 is a cross section of a third embodiment of a shear capsule; and

Figure 13 is a cross section of a fourth embodiment of a shear capsule.

### DESCRIPTION OF THE PREFERRED EMBODIMENTS

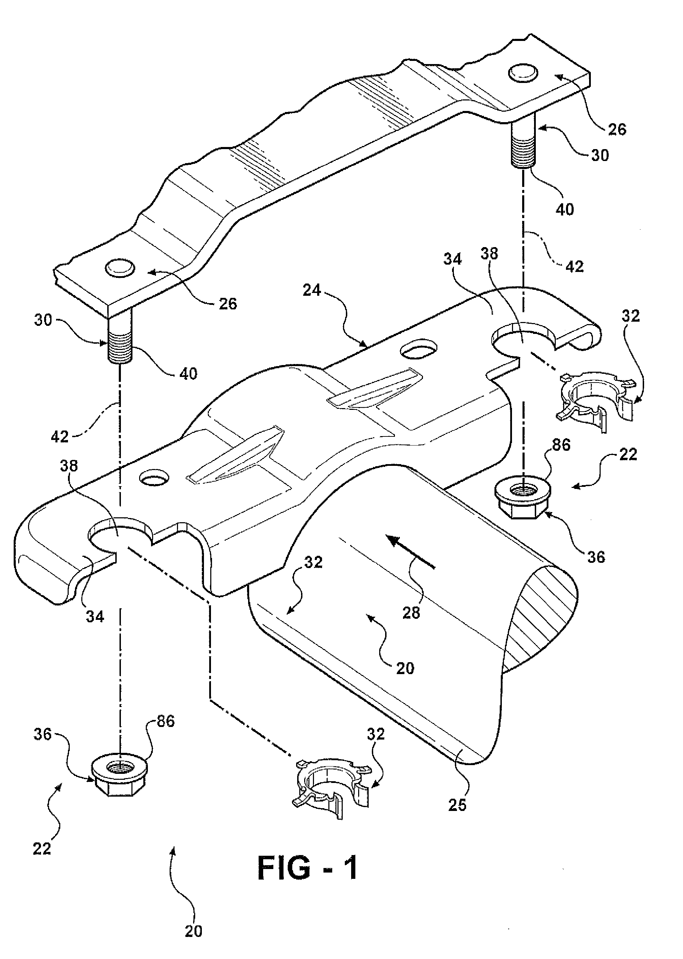

Referring to Figure 1 an energy absorbing steering column assembly 20 embodying the present invention utilizes at least one and preferably two shear capsules for generally attaching a steering column support 24 of a steering column 25 to a stationary bracket 26 that is part of, or fixed rigidly to, the chassis of a vehicle. During a frontal collision of the vehicle and upon a forward directed force 28 caused by a driver of the vehicle potentially impacting the steering wheel, the capsules are designed to first absorb a portion of energy produced by the forward force 28, then release and separate the support 24 from the bracket 26.

The shear capsule 22 has a pin 30, a spring clip 32, a deformation member or plate 34 and a fastener or threaded nut 36. The pin 30 extends substantially vertically and projects preferably downward from the stationary bracket 26, through a cavity 38 in the deformation member 34, and to a distal end 40 of the pin 30 for engagement of the fastener and preferably threaded engagement of the nut 36. A centerline 42 of the pin 30 is orientated substantially perpendicular to the deformation member 34 and substantially perpendicular to the directed force 28.

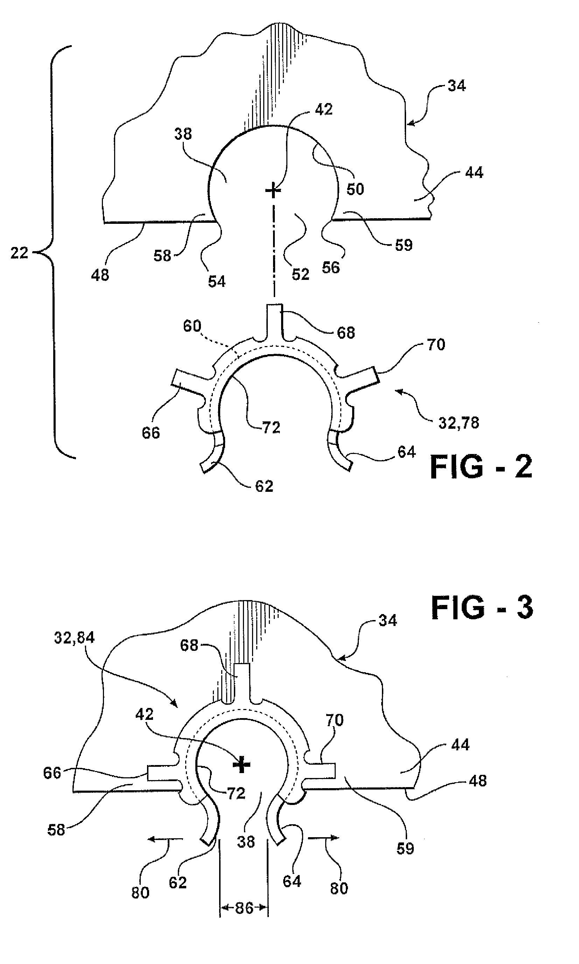

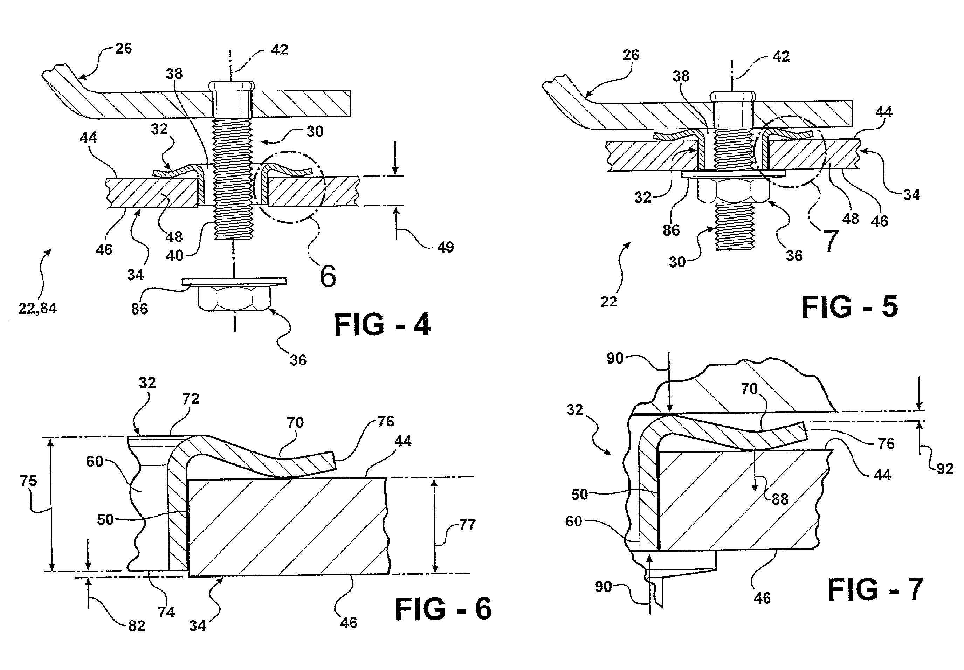

Referring to Figures 1-5, the deformation member 34 is a unitary part of, or generally integrated into, the steering column support 24, and is designed to deform plastically thereby releasing the spring clip 32, pin 30 and nut 36 upon the directed force 28 being of sufficient pre-determined magnitude and in a forward direction with respect to the vehicle. The member 34 has a top surface 44, an opposite bottom surface 46 and an edge or side face 48 that spans laterally between the surfaces 44, 46 by a distance 49 (see Figure 4) generally being the thickness of the deformation member or plate 34. The side face 48 is substantially vertical and faces substantially rearward with respect to the vehicle, and the surfaces 44, 46 are substantially horizontal. The cavity 38 communicates axially with respect to centerline 42 and through the opposite surfaces 44, 46 of the member 34. Preferably, the cavity 38 is generally a bore defined by a discontinuous circumferential or inner face 50 of the member 34 (see Figure 2) disposed concentric to centerline 42. The cavity 38 or the circumferential face 50 preferably has a radius that is slightly longer than the shortest radial distance between the centerline 42 and the side face 48 so that the cavity 38 has an opening 52 in the side face 48.

The inner face 50 extends circumferentially about the centerline 42 between opposite ends 54, 56 and by an angular displacement of greater than one hundred and eighty degrees and preferably in the range of 210-220 degrees. The ends 54, 56 are contiguous to the side face 48 and thereby generally form substantially vertical and opposing apexes that define the horizontal width of the opening 52. The apexes 54, 56 are generally the distal ends of opposing and respective horizontal projections 58, 59 of the deformation member 34.

The spring clip 32 has a cylindrical portion 60, a pair of guide tabs 62, 64 and preferably three flexible fingers 66, 68, 70. The cylindrical portion 60 is circumferentially discontinuous and generally co-extends with the cylindrical inner face 50 of the deformation member 34 when assembled and between tab 62 and 64. Generally, the tabs project outward through the opening 52 of the cavity 38 and flare away from one another for guided lateral receipt of the pin 30 into the cavity 38 during assembly. The cylindrical portion 60 extends axially between circumferentially extending upper and lower edges 72 74 of the cylindrical portion 60 and by a distance 75 which is greater than a thickness 77 of the deformation member 34.

Extending radially outward from the upper edge 72 are the three resiliently flexible fingers 66, 68, 70 that also angle slightly downward to respective distal ends 76. The fingers 66, 68, 70 are spaced circumferentially apart from one another along the upper edge 72. The finger 68 is disposed furthest from side face 48 and projects in a forward direction with respect to the vehicle. Preferably, and when three fingers are utilized fingers 66, 70 project in substantially opposite directions from one another and are adjacent and parallel to the side face 48. However, angular spacing about centerline 42 of primary importance to stabilize the load footprint. That is, when three fingers are used, and because the edge 48 is sufficiently close to the planar centerline of 38, the fingers 66, 70 are in close proximity. If more than three fingers are used, even angular spacing of the fingers is preferential.

Preferably, the spring clip 32 and the deformation member 34 are both made of steel, and the clip 32 is stamped from a hardened steel preferable of greater strength than the deformation member 34. Preferably, the support 24 and the member 34 are made of one unitary steel piece provided needed deformation characteristics can be maintained. However, one skilled in the art would now realize that the deformation member 34 may be welded or otherwise secured to the support 24. If welded, the low carbon content of member 34 simplifies the welding process.

During assembly of the shear capsule 22 of the energy absorbing steering column assembly 20, the spring clip 32 is initially flexed out of an as-formed state 78 (see Figure 2) by moving the guide tabs 62, 64 toward one-another and against a resilient biasing force 80 of the cylindrical portion 60 of the spring clip 32. With the tabs 62, 64 in close proximity to one another (i.e. less than the horizontal width of the opening 52) the cylindrical portion 60 of the spring clip 32 is inserted from an axial and downward direction into the cavity 38 and with the tabs 62, 64 projecting radially outward from the opening 52 of the cavity 38. This axial insertion continues until the distal ends 76 of the spring fingers 66, 68, 70 contact the upper surface 44 of the deformation member 34. The tabs 62, 64 are then released when non-flexed contact of the distal ends 76 is made and the lower edge 74 of the cylindrical portion 60 is slightly above the lower surface 46 of the member 34 by a distance 82 (see Figure 6). This release and the resiliency or radial force 80 of the cylindrical portion 60 causes portion 60 to generally flex radially outward and bias itself directly against the inner face 50 of member 34, thus placing the member 34 and spring clip 32 of the shear capsule 22 in a prestaged state 84 (see Figure 3).

When in the prestaged state 84, the projections 58, 59 of the member 34 generally prevent the spring clip 32 from returning to the as-formed state 78. The apexes 54, 56 are generally aligned to the contiguous transition of the cylindrical portion 60 to the flaring or flanking tabs 62, 64 at the window 52. A horizontal distance 86 (see Figure 3) between the tabs 62, 64 and when the spring clip 32 is in the prestaged state 84 is preferably slightly larger than a diameter of the pin 30 thus permitting lateral insertion of the pin into the cavity 38. Force 80 is of sufficient strength to maintain the spring clip 32 properly positioned in the cavity 38 and at least until the shear capsule 22 is fully assembled.

With the shear capsule 22 in the prestaged state 84 (see Figure 4), the member 34 and spring clip 32 are assembled to the stationary bracket 26 as a single unit. This unit can be moved horizontally and in a rearward direction with respect to the vehicle for laterally inserting the pin 30 into the cavity 38, or the unit may be lifted vertically thereby inserting the pin 30 axially through the cavity or bore 38. When the pin 30 is substantially concentric to centerline 42 and the upper edge 72 of the cylindrical portion 60 of the spring clip 32 is in approximate contact with the stationary bracket 26, the threaded nut 36 can be tightened rotatably.

Referring to Figures 4-7, the nut 36 preferably has an integral flange 86 or a separate washer that projects radially outward with respect to centerline 42 further than the cylindrical portion 60 and radially beyond a portion of the member 34. Tightening of the nut 36 causes the flange to first slidably abut the lower surface 46 of the member 34. Continued tightening places an axial and compressive force 88 (see Figure 7) upon the member 34 and between the nut 36 and distal ends 76 of the resiliently flexible fingers 66, 68, 70. Force 88 increases with continued tightening of the nut 36 which causes the fingers 66, 68, 70 to further flex and the distance 82 to further close or reduce. Force 88 is high enough to rigidly secure the steering column support 24 to the bracket 26 for normal operation of the vehicle (i.e. no rattling or vertical shifting).

When the lower edge 74 of the cylindrical portion 60 is substantially flush with the lower surface 46 of the member 34, further tightening of the nut 36 no longer increases force 88. At this point any additional compressive forces 90 are exerted axially and between the lower edge 74 contact with the nut 36, and the upper edge 72 contact with the stationary bracket 26. The nut 36 is properly tightened or torqued when compressive force 90 is substantially greater than the force necessary to deform or shear the projections 58, 59 of the deformation member 34.

With the shear capsule 22 fully assembled, the distal ends 76 of the fingers 66, 68, 70 exert the downward force 88 upon the upper surface 44 of the deformation member 34. Because a vertical space 92 is present between the distal ends 76 and the bracket 26, force 88 is independent of any other association of the spring clip 32 with the bracket 26. The compressive force 90 generally transforms the bracket 26, the pin 30, the spring clip 32 and the nut 36 into one rigid and noncompliant unit.

During a collision, the force 28 exerted upon the steering column support 24 need not overcome the compressive force 90, but must generally overcome the combination of frictional forces produced by force 88 of the fingers 66, 68, 70 and the force inherent in the material or steel of the deformation member 34 necessary to shear and/or deform the projections 58, 59.

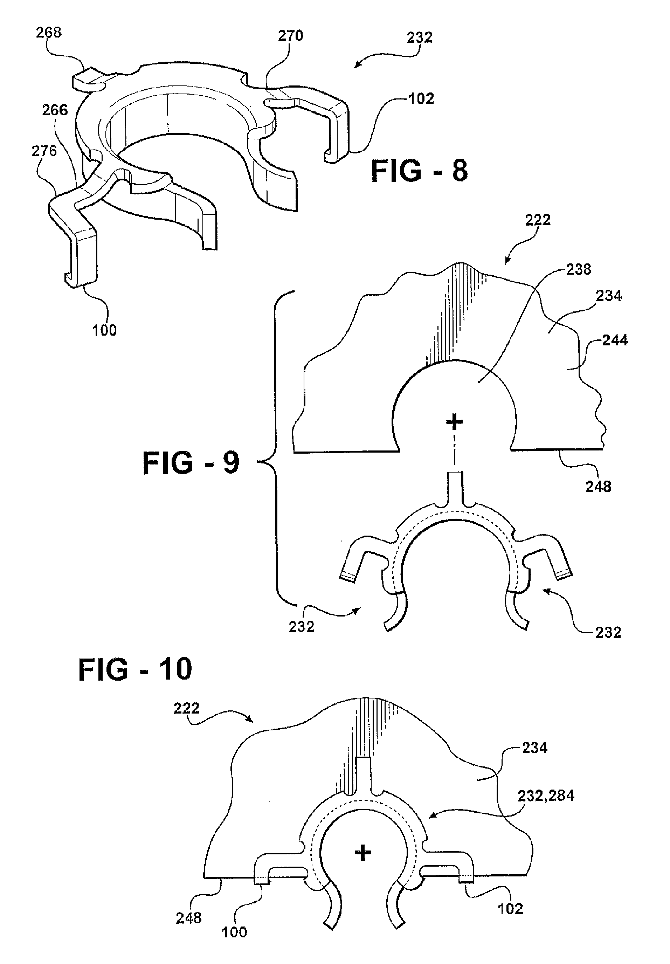

Referring to Figures 8-11, a second embodiment of a shear capsule 222 is illustrated wherein like elements of the first embodiment have like identifying numerals except with the summed addition of numeral 200. In capsule 222, attached or formed to ends 276 of resiliently flexible fingers 266, 270 of a spring clip 232 are respective claws 100, 102. When the spring clip 232 is in a prestaged state 284, as best shown in Figures 10-11, the claws 100, 102 extend across a side face 248 of a deformation member 234 to engage a bottom surface 246 of the member. This gripping of the claws 100, 102 helps to further stabilize and secure the spring clip 232 to the deformation member 234 when in the prestaged state 284 and during assembly of a steering column assembly to a bracket (not shown).

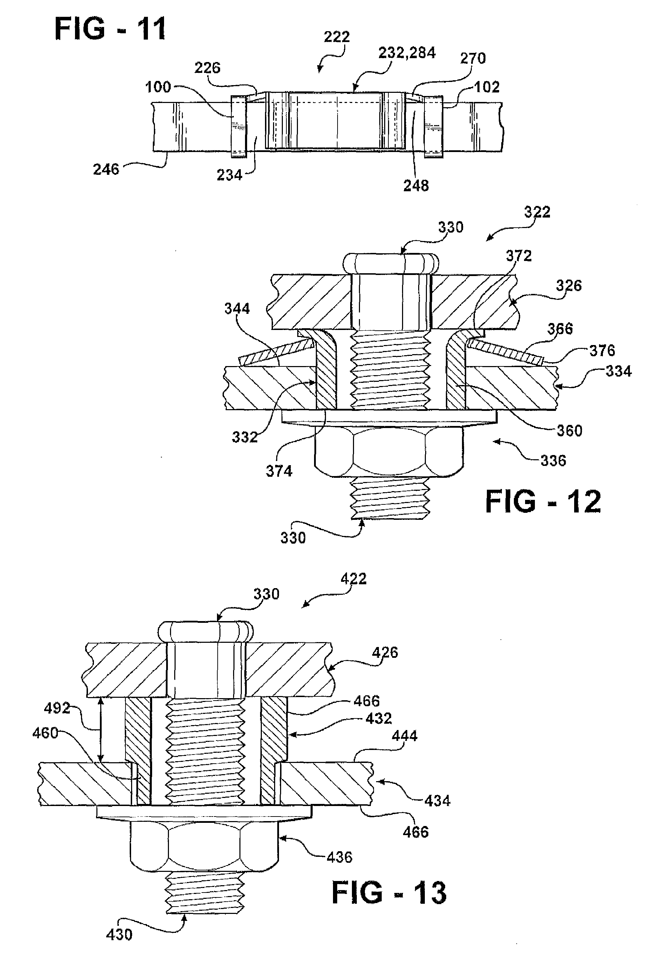

Referring to Figure 12, a third embodiment of a shear capsule 322 is illustrated wherein like elements of the first embodiment have like identifying numerals except with the summed addition of numeral 300. In capsule 322, the fingers 66, 68, 70 of the first embodiment are generally replaced with a belleville washer 366 having a distal end or circumferential outer edge 376 resiliently biased against a top surface 344 of a deformation member 334.

Referring to Figure 13, a fourth embodiment of a shear capsule 422 is illustrated wherein like elements of the first embodiment have like identifying numerals except with the summed addition of numeral 400. For the fourth embodiment, the resilient fingers 66, 68, 70 of the first embodiment are generally replaced with a discontinuous cylindrical flange 466 of a clip 432 that acts to maintain a space 492 between a deformation member 434 and a bracket 426. A space variation is accommodated with an annular beveled edge or surface 110 of the clip 432 that compliantly contacts a corner 112 at surface 444 and cylindrical surface 438.

While the forms of the invention herein disclosed constitute presently preferred embodiments, many others are possible. It is not intended herein to mention all the possible equivalent forms or ramification of the invention. It is understood that terms used herein are merely descriptive, rather than limiting, and that various changes may be made without departing from the spirit or scope of the invention.

## Claims

1. An energy absorbing steering column assembly releasably secured to a stationary bracket of a vehicle, the energy absorbing steering column assembly comprising:
a steering column;
a deformation member for supporting said steering column and defining a cavity;
a pin for rigid engagement and projection away from the stationary bracket, and wherein the pin extends through said cavity in said deformation member;
a spring clip located in-part within said cavity;
a fastener engaged to a distal end of said pin for exerting a compressive force upon said spring clip and said deformation member; and
wherein said deformation member is constructed and arranged to deform upon a vehicle collision force traverse to said compressive force thereby releasing said spring clip and said pin from said deformation member as one unitary element for remaining connected to the stationary bracket.

2. The energy absorbing steering column assembly set forth in claim 1 further comprising:
said deformation member having a first surface, an opposite second surface and a side face spanning between said first and second surfaces; and
wherein said cavity communicates through said first and second surfaces and through said side face and wherein said pin extends through said first and second surfaces and is radially spaced inward from said side face.

3. The energy absorbing steering column assembly set forth in claim 1 wherein said fastener is a threaded nut and said distal end is threaded for threaded engagement of said nut.

4. The energy absorbing steering column assembly set forth in claim 1 further comprising:
said pin extending along a centerline; and
said spring clip having a cylindrical portion disposed concentrically to said centerline and extending axially through said cavity from an annular base end to an annular distal end in compressive contact with said fastener and at least one finger projecting radially outward from said base end for spacing the stationary bracket away from said deformation member.

5. The energy absorbing steering column assembly set forth in claim 4 wherein said at least one finger is resiliently flexible.

6. The energy absorbing steering column assembly set forth in claim 5 wherein said at least one finger has a distal end in resilient contact with said deformation member.

7. The energy absorbing steering column assembly set forth in claim 2 further comprising:
said pin projecting substantially vertically along a centerline disposed transversely to said deformation member; and
said cavity having an opening in said side face for assembly of said spring clip to said deformation member and for passage of said spring clip and said pin upon a collision force placed upon said deformation member and in a forward direction with respect to the vehicle.

8. The energy absorbing steering column assembly set forth in claim 1 wherein said deformation member is welded to said steering column support.

9. A shear capsule for connecting a steering column assembly to a pin projecting along a centerline rigidly from a bracket of a vehicle, the shear capsule comprising:
a deformation member for releasable engagement to the pin and for supporting the steering column assembly during normal operation of the vehicle;
at least one fastener for axially compressive engagement to the pin; and
a spring clip having an axially extending portion for exerting a radial outward force with respect to the centerline and against said deformation member during assembly and for rigidly transmitting an axial compressive force from said fastener and against the bracket when assembled.

10. The shear capsule set forth in claim 9 further comprising said spring clip having a resiliently flexible finger projecting radially outward with respect to the centerline and from said portion for exerting a compressive axial force upon said fastener and through said deformation member.

11. The shear capsule set forth in claim 9 further comprising:
said deformation member having a first surface and an opposite second surface;
said portion being cylindrical and having a first edge and an opposite second edge spaced axially from said first edge by a distance greater than a thickness of said deformation member; and
wherein said second edge is in direct contact with said fastener when assembled.

12. The shear capsule set forth in claim 11 further comprising:
said finger having a distal end in direct biasing contact with said first surface of said deformation member when assembled; and
wherein said finger projects radially outward from said first edge and angles slightly axially toward said second edge for spacing said distal end from the bracket.

13. The shear capsule set forth in claim 12 further comprising:
said portion being a cylindrical portion concentric to the centerline when assembled; and
said finger is one of a plurality of fingers spaced circumferentially from one another.

14. The shear capsule set forth in claim 12 further comprising:
said portion being a cylindrical portion concentric to said centerline when assembled; and
said finger being a belleville washer.

15. The shear capsule set forth in claim 13 wherein said cylindrical portion is circumferentially discontinuous.

16. The shear capsule set forth in claim 9 wherein a cavity is in said deformation member for receipt of the pin, and wherein said spring clip is in-part in said cavity.

17. The shear capsule set forth in claim 16 wherein said cavity is defined by a cylindrical and circumferentially discontinuous inner face of said deformation member.

18. The shear capsule set forth in claim 16 further comprising:
said deformation member has a first surface substantially disposed perpendicular to the centerline, an opposite second surface, and a side face flanking the first and second surfaces; and
wherein said cavity communicates through said first and second surfaces, and wherein said side face defines an opening communicating with said cavity.

19. The shear capsule set forth in claim 18 wherein said deformation member has at least one projection defining in-part said cavity and defining in-part said opening.

20. The shear capsule set forth in claim 19 wherein said at least one projection is a first projection and an opposing second projection spaced circumferentially from the first projection by the opening.
